(19) Europäisches Patentamt European Patent Office Office européen des brevets

(11) **EP 4 237 486 B1**

(12) **EUROPEAN PATENT SPECIFICATION**

(45) Date of publication and mention
of the grant of the patent:
**04.12.2024 Bulletin 2024/49**

(21) Application number: **21799053.0**

(22) Date of filing: **28.10.2021**

(51) International Patent Classification (IPC):
$C08L\ 7/00$ (2006.01)    $B60C\ 1/00$ (2006.01)
$B60C\ 9/00$ (2006.01)    $C08L\ 9/06$ (2006.01)
$C08L\ 21/00$ (2006.01)    $B60C\ 9/20$ (2006.01)
$B60C\ 9/22$ (2006.01)

(52) Cooperative Patent Classification (CPC):
(C-Sets available)
**C08L 7/00; B60C 1/0016; B60C 9/2006;**
**B60C 9/22;** B60C 2009/208; B60C 2009/2261;
B60C 2009/228                    (Cont.)

(86) International application number:
**PCT/EP2021/079969**

(87) International publication number:
**WO 2022/090387 (05.05.2022 Gazette 2022/18)**

(54) **TBR PNEUMATIC TYRE**

TBR-LUFTREIFEN

PNEUMATIQUE TBR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.10.2020 IT 202000025834**

(43) Date of publication of application:
**06.09.2023 Bulletin 2023/36**

(73) Proprietor: **Bridgestone Europe NV/SA**
**1932 Zaventem (BE)**

(72) Inventors:
• **FORTE, Gianluca**
**00128 Roma (IT)**
• **SPIRI, Luca**
**00128 Roma (IT)**
• **RICCIO, Valeria**
**00128 Roma (IT)**
• **BARRIOS PEREZ, Brenda Cecilia**
**00128 Roma (IT)**

(74) Representative: **Marchetti, Alessio**
**Bridgestone Europe N.V./S.A. - Italian Branch**
**Technical Center**
**Via del Fosso del Salceto, 13/15**
**00128 Roma (IT)**

(56) References cited:
**WO-A1-2020/012294    US-A1- 2013 075 009**
**US-A1- 2016 152 082**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/06, C08K 3/04, C08K 3/36,
C08K 3/36, C08K 3/06, C08K 5/09, C08K 5/47**

**Description**

The present invention relates to a TBR pneumatic tyre. The abbreviation "TBR" is an acronym for the English wording "Truck & Bus Radial Tyre".

For some time now, also in the field of TBR pneumatic tyres, research has partly been aimed at improving the performance thereof in terms of rolling resistance. Lately, such a requirement is also dictated by a number of international regulations which impose a significant reduction in fuel consumption and in the resulting emissions of $CO_2$ into the environment.

As is known to persons skilled in the art, a solution for improving the rolling resistance of a pneumatic tyre tread relates to an increase in the amount of silica within the relative rubber compound.

Although an improvement is obtained in terms of rolling resistance, an increase in the amount of silica within the compound necessarily leads to a decrease in wear resistance.

As can immediately be seen, for TBR pneumatic tyres, wear resistance is one of the main requirements for the efficiency thereof. For TBR pneumatic tyres, any deterioration cannot possibly be accepted in terms of wear resistance by virtue of an improvement in terms of rolling resistance. Document WO 2020/012294 teaches a truck and bus radial tire (TBR) comprising a tread made from a cross-linking unsaturated chain polymer base comprising 50 pbw of a styrene- butadiene rubber, 50 pbw of natural rubber, 15 pbw of carbon black and 35 pbw of one silica.

The tread portions wherein wear phenomena are most present in TBR pneumatic tyres are the shoulders.

This type of wear derives both from different rigidity between the center and shoulders of the tread and from the lateral force to which the pneumatic tyre is subjected during rolling. In the pneumatic tyre industry, this lateral force is referred to by the English expression "ply steer" and is generated by asymmetries present within the carcass of the pneumatic tyre.

Wearing of the shoulders, in addition to causing a noise problem, may result in the replacement of the pneumatic tyre, despite the central part of the tread still being substantially intact.

The need was therefore felt to have a solution capable of implementing the production of TBR pneumatic tyres that would present improved rolling resistance without, for this reason, resulting in deterioration in terms of tread wear.

The inventors of the present invention have implemented a solution that, by intervening both on the belt pack and on the composition of the tread, is able to satisfy the requirement mentioned above.

It has long been known that it is possible to use belts marked with the wording "high elongation belt" in place of traditional belts marked with the wording "wavy belt".

The expression "high elongation belt" refers to a belt that is characterized by a modulus of rigidity that is variable as a function of deformation. In particular, the modulus of rigidity is low for a minimal force and high for a greater force. This allows the cord to expand during the vulcanization process and to ensure a high modulus of rigidity during operation.

For greater clarity, a "high elongation belt" is a belt that incorporates a cord with a modulus of rigidity which varies from about 3,000 MPa (low modulus, from 0 to about 2% deformation or elongation) to 125,000 MPa (high modulus, for a deformation of greater than about 2%).

Currently, a plurality of known types of "high elongation belt" is available.

The application of a "high elongation belt" offers important advantages in comparison to traditional ("wavy belt") construction.

In this respect, it should be remembered that those belts which are defined as "wavy belt" are applied as a strip of a plurality of calendered cords (preferably nine cords).

The application of this strip necessarily anticipates a significant "laying angle" or "tread belt angle," $\vartheta$, which is the angle between the cord and the longitudinal plane of symmetry L. Furthermore, as is known, the edges of such a strip must be protected by the overlapping of a further belt strip. As is known to a person skilled in the art, the greater the angle $\vartheta$ and the larger the additional protective belt strip, the greater will be the asymmetry of the pneumatic tyre and, therefore, the greater will be the "ply steer" to which the pneumatic tyre is subjected.

In contrast, insofar as a "high elongation belt" is applied as a single cord, it is possible to arrange it with an extremely small angle $\vartheta$ and, moreover, without the need to add a coating in order to protect the free edge of the strip. All of this translates to lower asymmetry of the belt pack and, therefore, to less "ply steer".

Another advantage of using the "high elongation belt" compared to the "wavy belt" resides in the possibility of its extending axially almost up to the tread shoulders. Conversely, if the "wavy belt" were to extend up to the tread shoulders, it would be subject to fatigue loads that would compromise the effectiveness thereof.

In summary, the use of "high elongation belts" with a laying angle $\vartheta$ close to zero and an extension up to the tread shoulders, confers improved wear resistance to the pneumatic tyre.

The inventors of the present invention have surprisingly found that the use of a "high elongation belt" in combination with a particular tread composition, in addition to ensuring the expected improvements in terms of wear resistance, also results in a significant improvement in terms of rolling resistance.

As will be described below, an unexpected synergistic effect is verified between the presence of the "high elongation belt" and the particular tread composition.

The object of the present invention is a TBR pneumatic tyre comprising a carcass, a tread and at least one "high elongation belt" formed from a single cord with a laying angle $\vartheta$ of between 0.03° and 0.1° and comprising an axial extension CW wherein the ratio thereof to the axial extension of said tread (TW/CW) is between 1.1 and 1.4; said tread being manufactured from a rubber compound comprising a cross-linkable unsaturated chain polymeric base comprising at least 50% by weight of natural rubber (NR), a mixture of fillers comprising silica and carbon black and a vulcanization system; said pneumatic tyre being characterized in that said mixture of fillers comprises (a) a carbon black having a surface area of between 99 and 170 $m^2/g$ and with a structure of greater than 120 cc/100 g, (b) a first silica having a surface area of less than 100 $m^2/g$, and (c) a second silica having a surface area greater than 190 $m^2/g$.

Here and hereinafter, the term "cross-linkable unsaturated chain polymeric base" refers to any natural or synthetic non-cross-linked polymer capable of assuming all of the chemical-physical and mechanical characteristics typically assumed by elastomers upon cross-linking (vulcanization) by means of cross-linking agents, for example sulfur.

Here and hereinafter, the term vulcanization system refers to a complex of ingredients comprising at least one cross-linking agent, for example sulfur, and accelerating compounds, which, in the preparation of the compound, are added during a final mixing step and which have the purpose of promoting the vulcanization of the polymeric base.

Preferably, the mixture of fillers comprises (a) 15-40% by weight of said carbon black, (b) 10-35% by weight of said first silica and (c) 40-80% by weight of a second silica having a surface area greater than 190 $m^2/g$.

Preferably, the mixture of fillers comprises (a) 25-35% by weight of said carbon black, (b) 15-25% by weight of said first silica, and (c) 50-60% by weight of said second silica.

Preferably, said carbon black has a surface area of between 120 and 150 $m^2/g$ and with a structure of between 120 and 170 cc/100 g, (b) said first silica has a surface area of between 70 and 100 $m^2/g$, and (c) said second silica having a surface area of between 190 and 250 $m^2/g$.

Preferably, the "high elongation belt" (5) is manufactured from RT (regular Tensile) steel or HT (High Tensile) steel or SHT (Super High Tensile) steel or UHT (Ultra High Tensile) steel.

The following are purely illustrative and non-limiting exemplary embodiments shown with the help of the annexed figure, which illustrates, in section view, a portion of a pneumatic tyre according to the present invention.

EXAMPLES

A pneumatic tyre according to the present invention is indicated in the entirety thereof with 1 in the figure. The pneumatic tyre 1 comprises a carcass 2, a tread 3 and a plurality of belts 4.

The tread comprises a central portion 3a and a pair of shoulders 3b.

The belts 4 comprise at least one belt 5 of the "high elongation belt" type as defined above. As illustrated in the figure, the belt 5 has an axial extension that meets the requirements defined in the claims.

In particular, the pneumatic tyre 1 comprises four belts of which the second, starting from the carcass 2, is a "high elongation belt" 5.

Three tread compounds (A - C) were made to be used for the manufacture of test pneumatic tyres wherein properties will be studied in relation to rolling resistance, wear resistance and uneven wear.

The compound A comprises a mixture of fillers which does not satisfy the composition of the present invention, while the B and C compounds comprise a mixture of fillers that does satisfy the composition of the present invention.

Herebelow, the procedure is given for the preparation of the compounds described in the examples. This procedure does not represent a limitation for the present invention.

The term "Intermesh Mixer" refers to a machine for mixing rubber as described and claimed in US5368383.

The term "non-productive mixing step" refers to a mixing step during which the ingredients of the compound, excluding the vulcanization system, are added and mixed with the cross-linkable unsaturated chain polymeric base; while the term "productive mixing step" refers to a mixing step during which the vulcanization system is added and mixed with the mixture under preparation.

- preparation of the compounds -

(first non-productive mixing step)

Before mixing, a first mixing chamber of a 5 liter "Intermesh Mixer" was loaded with the ingredients listed in Tables I and II with the exception of the sulfur, stearic acid and the accelerant, with a fill factor of 60-70%.

This first mixing step was performed while maintaining a temperature of 140°C for 60 seconds.

(second non-productive mixing step)

The mixture of the first step was discharged into a second 5 liter chamber of the "Intermesh" mixer reaching a fill factor of 35-41%.

This second mixing step was performed while maintaining a temperature of 155°C for 210 seconds.

(productive mixing step)

The mixture obtained from the second non-productive mixing step was discharged into a 2 liter tangential rotor mixer and to it were added sulfur, stearic acid and an accelerant reaching a fill factor equal to 70%.

The mixer was operated at a speed of 20-40 rpm, and the resulting mixture was unloaded upon reaching a temperature of 100-110°C.

Table I shows the compositions in phr of the compounds of the examples.

TABLE I

|  | A | B | C |
|---|---|---|---|
| NR | 70 | 70 | 70 |
| SBR | 30 | 30 | 30 |
| Carbon black | 37 | 15 | 18 |
| First silica (VLSA) | -- | 20 | 10 |
| Second silica (HSA) | 10 | 23 | 30 |
| Sulfur | 1.2 | 1.2 | 1.2 |
| Stearic acid | 3.5 | 3.5 | 3.5 |
| Accelerant | 2.15 | 2.15 | 2.15 |

NR is a 1,4-cis-polyisoprene rubber of natural origin. S-SBR is a polymeric base obtained by means of a solution polymerization process with an average molecular weight ranging, respectively, between $800\text{-}1500\times10^3$ and between $500\text{-}900\times10^3$, with a styrene content ranging between 10 and 45% and a vinyl content ranging between 20 and 70%.

The carbon black has a surface area of 138 $m^2/g$.

The first silica (VLSA) has a surface area of 80 $m^2/g$.

The second silica (HSA) has a surface area of 200 $m^2/g$.

The vulcanization accelerant utilized is N-tert-butyl-2-benzothiazyl-sulfenamide (TBBS).

The compounds reported in Table I were used for the construction of five pneumatic tyres (I - V). In particular, the pneumatic tyres I - IV are comparative examples, while the pneumatic tyre V represents a pneumatic tyre according to the invention.

In particular, the pneumatic tyre I does not comprise a "high elongation belt" and comprises a tread made using a compound wherein the mixture of fillers thereof comprises carbon black and only the silica with the high surface area (compound A); the pneumatic tyre II does not comprise a "high elongation belt" and comprises a tread made using a compound wherein the mixture of fillers thereof comprises carbon black, the high surface area silica and the low surface area silica according to the invention, in a ratio different than that according to the invention (compound B); the pneumatic tyre III does not comprise a "high elongation belt" and comprises a tread made using a compound wherein the mixture of fillers thereof comprises carbon black, the high surface area silica and the low surface area silica in the ratio according to the invention (compound C); the pneumatic tyre IV comprises a "high elongation belt" according to the characteristics of the invention and comprises a tread made using a compound wherein the mixture of fillers thereof comprises carbon black and only the high surface area silica (compound A); the pneumatic tyre V comprises a "high elongation belt" according to the characteristics of the invention and comprises a tread made using a compound wherein the mixture of fillers thereof comprises carbon black, the high surface area silica and the low surface area silica in the ratio according to the invention (compound C).

For the pneumatic tyres IV and V, the "high elongation belt" was made in applying the cord at a laying angle ϑ of 0.042.

For the pneumatic tyres IV and V, the TW/CW ratio is 1.25.

For the pneumatic tyres I-III, the TW/CW ratio (CW in these cases is the extension of the widest belt) is 1.5.

The pneumatic tyres I-V were subjected to a series of tests in order to evaluate those properties in relation to rolling resistance, wear resistance and uneven wear.

The rolling resistance was measured according to the R117 standard.

The wear resistance was evaluated using the procedure described below:

The pneumatic tyres were mounted on comparable tractors and trailers and subjected to the same operating conditions (for example, the type of road traveled, the number of kilometers traveled and the load).

During the procedure, the depth was recorded of the main grooves of the tread of the pneumatic tyre and whether the tread was developing signs of uneven wear such as cupping, depression of the ribs, alternating wear of the wings or wearing of the shoulders.

The data recorded for the wear resistance are the following:

$$WTD = OTD - RTD$$

$$KPM = (KM\ covered)\ /\ WTD$$

OTD = Original Tread Depth
RTD = Remaining Tread Depth

KPM is the parameter for classifying the wear amongst the specifications.

In Table II the results relating to the rolling resistance and the wear resistance are expressed in indexed form on the basis of the results obtained in relation to the pneumatic tyre I. The greater the reported values, the better the rolling resistance and wear resistance.

The uneven wear was evaluated using a rigid profile shaped according to the shape of the new tread. After using the pneumatic tyre, the rigid profile is rested against the tread, and whether or not the tread is still adhering to the rigid profile is evaluated. If, after using the pneumatic tyre, the tread is uniformly worn, then the portion in relation to the shoulders of the tread will still adhere to the rigid profile. Conversely, if the tread is worn in an irregular manner, then those portions in relation to the tread shoulders will no longer adhere to the rigid profile.

In Table II the irregular wear values are given in % of missing volume of rubber adhering to the rigid profile in relation to the missing volume of rubber adhering to the rigid profile in the pneumatic tyre I used as a reference.

TABLE II

|  | I | II | III | IV | V |
|---|---|---|---|---|---|
| Rolling resistance | 100 | 105 | 107 | 101 | 110 |
| Wear resistance | 100 | 60 | 80 | 145 | 145 |
| Uneven wear | 100 | 60 | 70 | 50 | 50 |

As appears evident from the data reported in Table II, the pneumatic tyre obtained according to the invention ensures, by means of the combined use of the particular mixture of fillers and of the "high elongation belt", a significant improvement in terms of rolling resistance, wear resistance and uneven wear.

In this respect, it should be noted that there is an unexpected synergistic effect in terms of rolling resistance. In fact, the pneumatic tyre of the invention (pneumatic tyre V) gives a rolling resistance result that is better than that of the pneumatic tyre III despite both using the same compound (Compound C).

In other words, the use of a "high elongation belt" ensures an improvement in terms of wear resistance and in terms of uneven wear and, surprisingly, produces a synergistic effect, with a particular combination of tread compound fillers, in terms of rolling resistance.

In this way it will be possible to manufacture a pneumatic tyre with improved rolling resistance without, for this reason, resulting in any worsening of the wear resistance.

**Claims**

1. TBR pneumatic tyre comprising a carcass, a tread and at least one "high elongation belt" formed from a single cord with a laying angle ϑ of between 0.03° and 0.1° and comprising an axial extension CW wherein the ratio thereof to the axial extension of said tread (TW/CW) is between 1.1 and 1.4; said tread being manufactured from a rubber compound comprising a cross-linkable unsaturated chain polymeric base comprising at least 50% by weight of natural rubber (NR), a mixture of fillers comprising silica and carbon black and a vulcanization system; said pneumatic tyre being **characterized in that** said mixture of fillers comprises (a) a carbon black having a surface area of between 99 and 170 $m^2/g$ and with a structure of greater than 120 cc/100 g, (b) a first silica having a surface area of less than 100 $m^2/g$, and (c) a second silica having a surface area of more than 190 $m^2/g$.

2. Pneumatic tyre according to claim 1, **characterized in that** the mixture of fillers comprises (a) 15-40% by weight of said carbon black, (b) 10-35% by weight of said first silica, and (c) 40-80% by weight of said second silica.

3. TBR pneumatic tyre according to claim 1, **characterized in that** the mixture of fillers comprises (a) 25-35% by weight of said carbon black, (b) 15-25% by weight of said first silica, and (c) 50-60% by weight of said second silica.

4. TBR pneumatic tyre according to one of the preceding claims, **characterized in that** said carbon black has a surface area of between 120 and 150 $m^2/g$ and with a structure of between 120 and 170 cc/100 g.

5. TBR pneumatic tyre according to one of the preceding claims, **characterized in that** said first silica has a surface area of between 70 and 100 $m^2/g$.

6. TBR pneumatic tyre according to one of the preceding claims, **characterized in that** said second silica has a surface area of between 190 and 250 $m^2/g$.

7. TBR pneumatic tyre according to one of the preceding claims, **characterized in that** it comprises four belts (4) of which the second (5) starting from the carcass (2) is a "high elongation belt."

8. TBR pneumatic tyre according to one of the preceding claims, **characterized in that** said "high elongation belt" (5) has a laying angle ϑ of 0.042 and an extension such that the TW/CW ratio is 1.25.

9. TBR pneumatic tyre according to one of the preceding claims, **characterized in that** said high elongation belt (5) is manufactured from RT (Regular Tensile) steel or HT (High Tensile) steel or SHT (Super High Tensile) steel or UHT (Ultra High Tensile) steel.

**Patentansprüche**

1. TBR-Luftreifen, umfassend eine Karkasse, eine Lauffläche und mindestens einen "Gürtel mit hoher Dehnung", der aus einem einzelnen Cord mit einem Verlegungswinkel ϑ zwischen 0,03° und 0,1° ausgebildet ist, und umfassend eine axiale Erstreckung CW, wobei das Verhältnis davon zu der axialen Erstreckung der Lauffläche (TW/CW) zwischen 1,1 und 1,4 liegt; wobei die Lauffläche aus einer Kautschukmischung, umfassend eine vernetzbare ungesättigte Kettenpolymerbasis, umfassend zu mindestens 50 Gew.-% Naturkautschuk (NR), einer Mischung von Füllstoffen, umfassend Kieselerde und Ruß, und einem Vulkanisationssystem hergestellt ist; wobei der Luftreifen **dadurch gekennzeichnet ist, dass** die Mischung von Füllstoffen (a) einen Ruß, der einen Oberflächenbereich zwischen 99 und 170 m$^2$/g und mit einer Struktur von mehr als 120 cc/100 g aufweist, (b) eine erste Kieselerde, die eine Oberfläche von weniger als 100 m$^2$/g aufweist, und (c) eine zweite Kieselerde, die eine Oberfläche von mehr als 190 m$^2$/g aufweist, umfasst.

2. Luftreifen nach Anspruch 1, **dadurch gekennzeichnet, dass** die Mischung von Füllstoffen (a) zu 15-40 Gew.-% Ruß, (b) zu 10-35 Gew.-% die erste Kieselerde und (c) zu 40-80 Gew.-% die zweite Kieselerde umfasst.

3. TBR-Luftreifen nach Anspruch 1, **dadurch gekennzeichnet, dass** die Mischung von Füllstoffen (a) zu 25-35 Gew.-% Ruß, (b) zu 15-25 Gew.-% die erste Kieselerde und (c) zu 50-60 Gew.-% die zweite Kieselerde umfasst.

4. TBR-Luftreifen nach einem der vorstehenden Ansprüche, **dadurch gekennzeichnet, dass** der Ruß einen Oberflächenbereich zwischen 120 und 150 m$^2$/g und mit einer Struktur zwischen 120 und 170 cc/100 g aufweist.

5. TBR-Luftreifen nach einem der vorstehenden Ansprüche, **dadurch gekennzeichnet, dass** die erste Kieselerde einen Oberflächenbereich zwischen 70 und 100 m$^2$/g aufweist.

6. TBR-Luftreifen nach einem der vorstehenden Ansprüche, **dadurch gekennzeichnet, dass** die zweite Kieselerde einen Oberflächenbereich von zwischen 190 und 250 m$^2$/g aufweist.

7. TBR-Luftreifen nach einem der vorstehenden Ansprüche, **dadurch gekennzeichnet, dass** er vier Gürtel (4) umfasst, von denen der zweite (5), der von der Karkasse (2) ausgeht, ein "Gürtel mit hoher Dehnung" ist.

8. TBR-Luftreifen nach einem der vorstehenden Ansprüche, **dadurch gekennzeichnet, dass der** "Gürtel mit hoher Dehnung" (5) einen Verlegungswinkel ϑ von 0,042 und eine Erstreckung derart aufweist, dass das TW/CW-Verhältnis 1,25 beträgt.

9. TBR-Luftreifen nach einem der vorstehenden Ansprüche, **dadurch gekennzeichnet, dass** der Gürtel (5) mit hoher Dehnung aus RT-Stahl (Regular-Tensile-Stahl) oder HT-Stahl (High-Tensile-Stahl) oder SHT-Stahl (Super-High-Tensile-Stahl) oder UHT-Stahl (Ultra-High-Tensile-Stahl) hergestellt ist.

**Revendications**

1. Pneumatique TBR comprenant une carcasse, une bande de roulement et au moins une « ceinture à allongement élevé » formée d'un câble unique avec un angle de commettage ϑ compris entre 0,03° et 0,1° et comprenant une extension axiale CW dans lequel le rapport de celle-ci à l'extension axiale de ladite bande de roulement (TW/CW) est compris entre 1,1 et 1,4 ; ladite bande de roulement étant fabriquée à partir d'un composé de caoutchouc comprenant une base polymère à chaîne insaturée réticulable comprenant au moins 50 % en poids de caoutchouc naturel (NR), un mélange de charges comprenant de la silice et du noir de carbone et un système de vulcanisation ; ledit pneumatique étant **caractérisé en ce que** ledit mélange de charges comprend (a) un noir de carbone ayant une surface spécifique comprise entre 99 et 170 m$^2$/g et avec une structure supérieure à 120 cm$^3$/100 g, (b) une première silice ayant une surface spécifique inférieure à 100 m$^2$/g, et (c) une seconde silice ayant une surface spécifique de plus de 190 m$^2$/g.

2. Pneumatique selon la revendication 1, **caractérisé en ce que** le mélange de charges comprend (a) 15 à 40 % en poids dudit noir de carbone, (b) 10 à 35 % en poids de ladite première silice, et (c) 40 à 80 % en poids de ladite seconde silice.

3. Pneumatique TBR selon la revendication 1, **caractérisé en ce que** le mélange de charges comprend (a) 25 à 35 % en poids dudit noir de carbone, (b) 15 à 25 % en poids de ladite première silice, et (c) 50 à 60 % en poids de ladite seconde silice.

4. Pneumatique TBR selon l'une des revendications précédentes, **caractérisé en ce que** ledit noir de carbone a une surface spécifique comprise entre 120 et 150 m$^2$/g et avec une structure comprise entre 120 et 170 cm$^3$/100 g.

5. Pneumatique TBR selon l'une des revendications précédentes, **caractérisé en ce que** ladite première silice a une surface spécifique comprise entre 70 et 100 m$^2$/g.

6. Pneumatique TBR selon l'une des revendications précédentes, **caractérisé en ce que** ladite seconde silice a une surface spécifique comprise entre 190 et 250 m$^2$/g.

7. Pneumatique TBR selon l'une des revendications précédentes, **caractérisé en ce qu'**il comprend quatre ceintures (4) dont la deuxième (5) en partant de la carcasse (2) est une « ceinture à allongement élevé ».

8. Pneumatique TBR selon l'une des revendications précédentes, **caractérisé en ce que** ladite « ceinture à allongement élevé » (5) a un angle de commettage $\vartheta$ de 0,042 et une extension telle que le rapport TW/CW vaut 1,25.

9. Pneumatique TBR selon l'une des revendications précédentes, **caractérisé en ce que** ladite ceinture à allongement élevé (5) est fabriquée à partir d'acier RT (résistance en traction ordinaire) ou de l'acier HT (haute résistance en traction) ou de l'acier SHT (très haute résistance en traction) ou de l'acier UHT (ultra-haute résistance en traction).

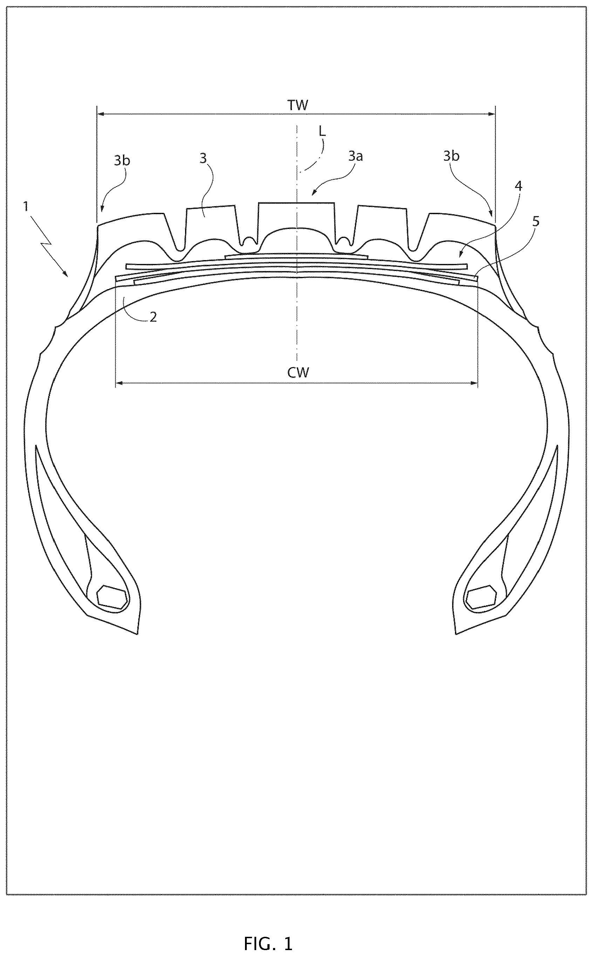

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020012294 A
- US 5368383 A